# NEUE EUROPÄISCHE PATENTSCHRIFT

(11) **EP 3 180 501 B2**
(45) Veröffentlichungstag und Bekanntmachung des Hinweises auf die Entscheidung über den Einspruch: **09.04.2025**
(45) Hinweis auf die Patenterteilung: 23.12.2020
(21) Anmeldenummer: 15748220.9
(22) Anmeldetag: 04.08.2015
(51) Int. Cl.: F01N 3/20, F16L 57/00, F16L 57/02, F16L 11/10, F16L 11/12, F16L 51/00, F16L 53/00, F16L 53/38

(54) **FLUIDLEITUNG**
FLUID LINE
CONDUITE POUR FLUIDE

(30) Priorität: 12.08.2014 DE 102014111458
(43) Veröffentlichungstag der Anmeldung: 21.06.2017
(73) Patentinhaber: NORMA Germany GmbH, 63477 Maintal (DE)
(72) Erfinder: MANN, Stephan, 63599 Biebergemünd (DE)
(74) Vertreter: Patentanwälte Olbricht Buchhold Keulertz
(86) Internationale Anmeldenummer: PCT/EP2015/067978
(87) Internationale Veröffentlichungsnummer: WO 2016/023797

(56) Entgegenhaltungen:
- EP-A1- 2 009 338
- EP-B1- 2 463 566
- BE-A- 572 473
- CA-A1- 2 846 801
- DE-U1- 20 211 150
- DE-U1- 202012 101 676
- JP-A- 2007 071 226
- US-A- 4 683 917
- US-A- 5 277 227
- Artikel: Vernetztes Polyethylen (VPE)

## Beschreibung

Die Erfindung betrifft eine Fluidleitung mit einem Rohr aus Kunststoffmaterial.

Eine solche Fluidleitung ist aus der JP 2007 071226 A oder auch aus der US 4,683,917 bekannt.

Die Erfindung wird im Folgenden anhand einer Fluidleitung beschrieben, die zum Transport einer Harnstofflösung, so genanntes "Urea", von einem Tank zu einer Verbrauchsstelle verwendet wird. Urea wird in Dieselmotoren verwendet, um Stickoxide zu reduzieren.

Urea wird in den Abgasstrang eines Dieselmotors eingespritzt. Dieser Abgasstrang weist eine erhöhte Temperatur auf. Viele Kunststoffe sind mit dieser Temperatur nicht belastbar, so dass die Urea-Leitung mit einem gewissen Abstand zum Abgasstrang geführt werden muss. Dies schränkt die Freiheit bei der Führung der Fluidleitung ein.

Der Erfindung liegt die Aufgabe zugrunde, bei der Führung der Fluidleitung flexibel zu sein.

Diese Aufgabe wird bei einer Fluidleitung gemäß dem Anspruch 1 gelöst.

Die Verwendung eines Kunststoffmaterials mit der angegebenen Temperaturbeständigkeit verhindert zwar, dass der Kunststoff durch die erhöhte Temperatur in der Umgebung des Abgasstranges beschädigt wird. Allerdings ergibt sich ein anderes Problem dadurch, dass das Fluid, das in der Fluidleitung geführt wird, bei den hohen Temperaturen verdampft und dadurch ein relativ hoher Dampfdruck entsteht, der durchaus größer als 10 bar sein kann. Kunststoffmaterialien, die die hohen Temperaturen aushalten, werden bei diesen hohen Temperaturen vielfach weich und dehnen sich aus. Bei den relativ hohen Drücken kann dieses Ausdehnen bis zum Platzen des Rohres führen. Das Risiko des Platzens könnte man zwar dadurch verhindern, dass man im Rohr mehr Kunststoffmaterial verwendet. Dies hat dann aber den Nachteil, dass das Rohr eine größere Steifigkeit bekommt und schlechter verarbeitet werden kann. Wenn man nun einen Dehnschutz verwendet, der das Rohr umgibt, dann verhindert man ein Ausdehnen des Rohres und hält damit das Risiko klein, dass das Rohr aufgrund eines erhöhten Dampfdrucks des Fluids, beispielsweise Urea, platzt. Der Dehnschutz selbst muss gegen das Fluid nicht beständig sein. Man kann das Material und die Konstruktion des Dehnschutzes dann ausschließlich oder zumindest hauptsächlich auf die Funktion abstimmen, ein Ausdehnen des Rohres zu verhindern.

Vorzugsweise liegt das Rohr bei einem vorbestimmten Innendruck, der kleiner als der vorbestimmte Grenzdruck ist, radial innen am Dehnschutz an. Im Idealfall liegt der Dehnschutz immer am Außenumfang des Rohres an. Dies würde jedoch die Montage des Dehnschutzes auf dem Rohr erheblich erschweren. Man lässt daher ein kleines Spiel zwischen dem Außendurchmesser des Rohres und dem Innendurchmesser des Dehnschutzes zu. Dieses Spiel ist jedoch so klein, dass es aufgrund der Dehnung des Rohres bereits bei relativ kleinen Innendrücken verschwindet, so dass der Dehnschutz ein weiteres Ausdehnen des Rohres bei einem erhöhten Innendruck zuverlässig verhindern kann. Der Innendruck, bei dem das Rohr innen am Dehnschutz anliegt, kann beispielsweise 2, 3, 4 oder 5 bar betragen.

Vorzugsweise weist der Dehnschutz mehrere Stützscheiben auf, die im Wesentlichen senkrecht zur radial äußeren Oberfläche des Rohres gerichtet sind. Damit lässt sich die Masse des Dehnschutzes klein halten. Die Stützscheiben können entlang der Längserstreckung des Rohres relativ dünn sein. Die Stabilität ergibt sich dadurch, dass sie im Wesentlichen senkrecht zur radial äußeren Oberfläche des Rohres gerichtet sind und damit relativ große Kräfte aufnehmen können, weil die Stützscheiben in diese Richtung aufgrund ihrer Ausrichtung praktisch nicht verformt werden können.

Vorzugsweise sind die Stützscheiben entlang der Längserstreckung des Rohres miteinander verbunden. Dies erleichtert die Montage. Darüber hinaus kann man durch die Verbindung auf einfache Weise sicherstellen, dass die Stützscheiben nach der Montage einen vorbestimmten Abstand zueinander beibehalten.

Vorzugsweise weisen die Stützscheiben in Längserstreckung des Rohres einen Abstand zueinander auf, der maximal dem Außendurchmesser des Rohres entspricht. Zwischen den Stützscheiben ist das Rohr radial nach außen nicht oder in einem geringeren Maße abgestützt als direkt bei den Stützscheiben. Hier könnte sich das Rohr also theoretisch ausdehnen. Wenn man jedoch den Abstand der Stützscheiben entlang der Längserstreckung des Rohres begrenzt, dann steht für eine Dehnung des Rohres nicht genügend Raum zur Verfügung.

Der Dehnschutz weist einen Innendurchmesser auf, der maximal 0,8 mm größer ist als der Außendurchmesser des Rohres. Damit ergibt sich ein Spiel von maximal 0,4 mm um das Rohr herum, das für die Montage des Dehnschutzes auf dem Rohr ausreicht. Eine Dehnung des Rohres, um dieses Spiel zu beseitigen, ist jedoch unkritisch.

Der Dehnschutz weist vorzugsweise einen Innendurchmesser auf, der maximal 10% größer ist als der Außendurchmesser des Rohres. Damit kann sich das Rohr um maximal 10% seines Außendurchmessers ausdehnen. Auch eine derartige Ausdehnung ist unkritisch, weil sie noch nicht zum Platzen oder einer anderen Beschädigung des Rohres führt.

Der Dehnschutz weist mehrere Abschnitte auf, die über die Länge des Rohres verteilt sind. Dies erleichtert die Montage. Darüber hinaus sind bestimmte Abschnitte des Rohres ohne Dehnschutz ausgebildet. Dies spart unter anderem Gewicht, was insbesondere bei der Verwendung in einem Kraftfahrzeug von Vorteil ist. Vorzugsweise ist an mindestens einem Ende des Rohres ein Leitungsverbinder angeordnet, der einen Anschlussstutzen aufweist, der in das Rohr eingesteckt ist, wobei der Dehnschutz den Anschlussstutzen zumindest auf einem Teil seiner Länge überdeckt. Auch im Bereich des Anschlussstutzens wird dann ein Dehnen des Rohres verhindert. Damit wird das Risiko einer Leckage in diesem Bereich klein gehalten.

Hierbei ist bevorzugt, dass der Dehnschutz im Bereich des Anschlussstutzens einen glatten Endbereich aufweist. Im Bereich des Anschlussstutzens ist das Risiko, dass sich ein erhöhter Dampfdruck aufbaut, kleiner, weil zwischen dem Rohr und dem Anschlussstutzen üblicherweise kein Fluid vorhanden ist. Wenn der Dehnschutz hier einen glatten Endbereich aufweist, dann nimmt der Dehnschutz im Bereich des Leitungsverbinders weniger Bauraum ein, was die Handhabung erleichtert.

Hierbei ist bevorzugt, dass der Dehnschutz mit dem Leitungsverbinder verbunden ist. Damit lässt sich die Position des Dehnschutzes auf dem Rohr mit großer Zuverlässigkeit genau festlegen.

Die Erfindung wird im Folgenden anhand von bevorzugten Ausführungsbeispielen in Verbindung mit der Zeichnung beschrieben. Hierin zeigen:
- Fig. 1: eine erste Ausgestaltung einer Fluidleitung und
- Fig. 2: eine zweite Ausgestaltung einer Fluidleitung.

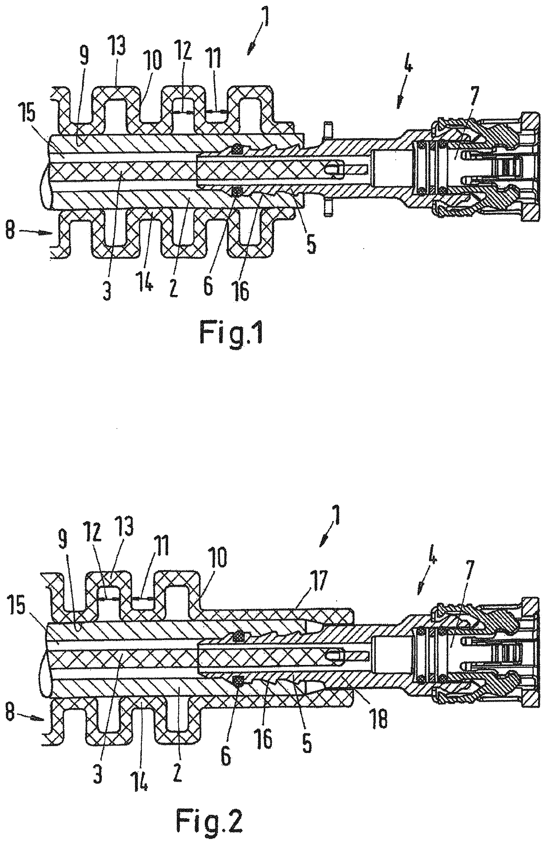

Fig. 1 zeigt schematisiert eine Fluidleitung 1 mit einem Rohr 2, das aus einem Kunststoffmaterial gebildet ist. Das Kunststoffmaterial ist mit einer Temperatur von mindestens 150° C belastbar. Im Rohr 2 ist eine Heizeinrichtung in Form eines Heizstabs 3 angeordnet.

An dem Ende des Rohres 2, das in Fig. 1 dargestellt ist, ist ein Leitungsverbinder 4 angeordnet. Der Leitungsverbinder 4 weist einen Anschlussstutzen 5 an einem Ende auf. Das Rohr 2 ist auf den Anschlussstutzen 5 aufgeschoben. Eine Dichtung 6 kann zwischen dem Anschlussstutzen 5 und dem Rohr 2 angeordnet sein. Am anderen Ende weist der Leitungsverbinder 4 eine Anschlussgeometrie 7 auf.

Das Rohr 2 ist von einem Dehnschutz 8 umgeben. Der Dehnschutz 8 liegt mit seinem Innenumfang 9 praktisch am Außenumfang des Rohres 2 an. Tatsächlich wird jedenfalls bei der Montage des Dehnschutzes 8 auf dem Rohr 2 ein gewisses Spiel vorhanden sein, um die Montage nicht unnötig zu erschweren. Dieses Spiel ist aber relativ klein. So kann man die Fluidleitung 1 beispielsweise so ausgestalten, dass der Dehnschutz 8 einen Innendurchmesser aufweist, der maximal 0,8 mm größer ist als der Außendurchmesser des Rohres 2. Eine andere oder weitere Bemessungsvorschrift ist, dass der Innendurchmesser 9 des Dehnschutzes 8 maximal 10 % größer ist als der Außendurchmesser des Rohres 2.

Der Dehnschutz 8 weist eine Folge von Stützscheiben 10 auf, die entlang der Längserstreckung des Rohres 2 angeordnet sind. Zwischen den Stützscheiben 10 sind Abstände 11, 12 vorgesehen, die jeweils maximal dem Außendurchmesser des Rohres 2 entsprechen.

Die Stützscheiben 10 sind parallel zur Längserstreckung des Rohres 2 miteinander verbunden. Hierzu sind im vorliegenden Ausführungsbeispiel radial äußere Verbindungswände 13 und radial innere Verbindungswände 14 vorgesehen. Die radial äußeren Verbindungswände 13 und die radial inneren Verbindungswände 14 wechseln einander ab. Man kann den Dehnschutz 8 aber auch so ausgestalten, dass die Verbindungswände 13, 14 alle an den gleichen radialen Positionen angeordnet sind. Die in Fig. 1 dargestellte Ausgestaltung hat jedoch den Vorteil, dass die Stützscheiben 10 besser gegen ein Verkippen gesichert sind.

Der Dehnschutz 8 überdeckt mit zwei Stützscheiben 10 auch noch den Anschlussstutzen 5 des Leitungsverbinders 4.

Die dargestellte Ausgestaltung der Fluidleitung 1 kann auch in einem Bereich eingesetzt werden, in dem eine erhöhte Temperatur herrscht. Hierzu ist der Kunststoff des Rohres 2 zunächst einmal relativ temperaturbeständig, d.h. er ist mit einer Temperatur von 150° C belastbar. Ein derartiger Kunststoff wird jedoch vielfach relativ weich, wenn er höheren Temperaturen ausgesetzt ist. Dies kann dann zu Problemen führen, wenn im Innenraum 15 des Rohres 2 eine verdampfbare Flüssigkeit angeordnet ist, beispielsweise eine Harnstofflösung oder Urea. Wenn diese Flüssigkeit einer Temperatur von mehr als 100° C ausgesetzt wird, dann verdampft sie zumindest teilweise und erzeugt dadurch im Innenraum 15 einen erhöhten Druck, der durchaus deutlich über 10 bar liegen kann, beispielsweise 14 oder 15 bar. Dieser erhöhte Druck würde den erweichten Kunststoff von radial innen beaufschlagen, so dass das Risiko besteht, dass sich das Rohr ausdehnt. Dies kann bis zum Platzen des Rohres 2 führen.

Der Dehnschutz 8 sorgt mit seinen Stützscheiben 10 dafür, dass die Dehnung des Rohres 2 nur im Rahmen des für die Montage notwendigen Spiels stattfinden kann. Bereits bei relativ geringen Drücken, von 1,2,3,4 oder 5 bar ist das Rohr dann soweit ausgedehnt, dass es sich an den Innenumfang 9 des Dehnschutzes 8 anlegt und sich nicht mehr weiter radial nach außen ausdehnen kann. Diese Dehnung ist zulässig. Man geht davon aus, dass eine Dehnung von maximal 10 % noch nicht zu einem Platzen des Rohres 2 führt.

Da die Stützscheiben 10 mit Abständen 11, 12 zueinander angeordnet sind, besteht in diesen Abständen 11, 12 das Risiko, dass sich das Rohr 2 hier ausdehnt. Dieses Risiko ist jedoch vernachlässigbar, wenn man die Stützscheiben 10 mit Abständen 11, 12 zueinander anordnet, die maximal dem Außendurchmesser des Rohres 2 entsprechen. Bevorzugterweise entsprechen die Abstände 11, 12 maximal 50 % des Außendurchmessers und in einer besonders bevorzugten Ausgestaltung maximal 40 % des Außendurchmessers des Rohres 2.

Der Dehnschutz 8 hat zusätzlich den Vorteil, dass er einen Windschutz bildet. Dies ist beispielsweise dann von Vorteil, wenn die Fluidleitung 1 bei einem Kraftahrzeug im Fahrtwind angeordnet ist. In diesem Fall besteht das Risiko, dass sie auch schon bei Temperaturen einfriert, bei denen sie ohne Fahrtwind noch nicht einfrieren würde.

Dadurch, dass der Dehnschutz 8 auch den Anschlussstutzen 5 übergreift, verhindert man eine radiale Dehnung des Rohres auch hier, so dass das Rohr 2 auf dem Anschlussstutzen 5 festgehalten werden kann. Der Anschlussstutzen 5 kann beispielsweise ein Tannenbaumprofil 16 aufweisen.

Fig. 2 zeigt eine abgewandelte Ausgestaltung einer Fluidleitung 1. Gleiche und entsprechende Elemente wie in Fig. 1 sind mit den gleichen Bezugszeichen versehen.

Im Gegensatz zu der Ausgestaltung nach Fig. 1 weist der Dehnschutz 8 einen glatten Endbereich 17 auf, der den Anschlussstutzen 5 umgibt. Der Endbereich 17 ist also frei von Stützscheiben 10.

Der Endbereich 17 ist über das Rohr 2 in Richtung auf den Leitungsverbinder 4 hinausgeführt und mit dem Leitungsverbinder 4 an einem Gehäuseabschnitt 18 verbunden. Die Verbindung kann beispielsweise durch Ultraschallschweißen oder Verkleben erfolgen. Damit ergibt sich eine definierte Position des Dehnschutzes 8 relativ zum Leitungsverbinder 4 und damit auch relativ zum Rohr 2. Diese Position wird auch bei einer Verformung der Fluidleitung 1 beispielsweise während einer Montage nicht verändert. ist vorgese

In nicht näher dargestellter Weise ist vorgesehen, dass der Dehnschutz 8 nur auf vorbestimmten Abschnitten des Rohres 2 vorhanden ist. Andere Abschnitte des Rohres 2 bleiben frei von einem Dehnschutz 8.

Das Material des Dehnschutzes 8 kann ausschließlich im Hinblick auf die Hitzebeständigkeit und die mechanische Beständigkeit hin gewählt werden und der Dehnschutz 8 kann auch ausschließlich im Hinblick auf diese Kriterien dimensioniert werden. So kann der Dehnschutz beispielsweise aus Polyamid 6 gebildet sein, das hochtemperaturbeständig ist. Polyamid 6 hat zwar eine geringe Dehnung. Diese ist jedoch so gering, dass das Risiko eines Platzens des Rohres 2 aufgrund eines erhöhten Innendrucks praktisch nicht gegeben ist.

## Patentansprüche

1. Fluidleitung (1) mit einem Rohr (2) aus einem Kunststoffmaterial, wobei das Rohr (2) zumindest auf einem Teil seiner Länge von einem Dehnschutz (8) umgeben ist, wobei das Kunststoffmaterial mit einer Temperatur von mindestens 150°C belastbar ist und die Fluidleitung (1) ein Spiel zwischen einem Innendurchmesser (9) des Dehnschutzes (8) und einem Außendurchmesser des Rohres (2) aufweist, **dadurch gekennzeichnet, dass** der Dehnschutz (8) einen Innendurchmesser (9) aufweist, der maximal 0,8 mm größer ist als der Außendurchmesser des Rohres (2), wobei der Dehnschutz (8) mehrere Abschnitte aufweist, die über die Länge des Rohres (2) verteilt sind, wobei bestimmte Abschnitte des Rohres (2) ohne Dehnschutz ausgebildet sind.

2. Fluidleitung nach Anspruch 1, **dadurch gekennzeichnet, dass** das Rohr (2) bei einem vorbestimmten Innendruck, der kleiner als ein vorbestimmter Grenzdruck ist, radial innen am Dehnschutz (8) anliegt.

3. Fluidleitung nach Anspruch 1 oder 2, **dadurch gekennzeichnet, dass** der Dehnschutz (8) mehrere Stützscheiben (10) aufweist, die im Wesentlichen senkrecht zur radial äußeren Oberfläche des Rohres (2) gerichtet sind.

4. Fluidleitung nach Anspruch 3, **dadurch gekennzeichnet, dass** die Stützscheiben (10) entlang der Längserstreckung des Rohres (2) miteinander verbunden sind.

5. Fluidleitung nach Anspruch 3 oder 4, **dadurch gekennzeichnet, dass** die Stützscheiben (10) in Längserstreckung des Rohres (2) einen Abstand (11, 12) zueinander aufweisen, der maximal dem Außendurchmesser des Rohres (2) entspricht.

6. Fluidleitung nach einem der Ansprüche 1 bis 5, **dadurch gekennzeichnet, dass** an mindestens einem Ende des Rohres (2) ein Leitungsverbinder (4) angeordnet ist, der einen Anschlussstutzen (5) aufweist, der in das Rohr (2) eingesteckt ist, wobei der Dehnschutz (8) den Anschlussstutzen (5) zumindest auf einem Teil seiner Länge überdeckt.

7. Fluidleitung nach Anspruch 6, **dadurch gekennzeichnet, dass** der Dehnschutz (8) im Bereich des Anschlussstutzens (5) einen glatten Endbereich (17) aufweist.

8. Fluidleitung nach Anspruch 6 oder 7, **dadurch gekennzeichnet, dass** der Dehnschutz (8) mit einem Leitungsverbinder (4) verbunden ist.

## Claims

1. Fluid line (1) with a pipe (2) composed of a plastic material, wherein the pipe (2) is surrounded at least over a part of its length by an expansion protector (8), wherein the plastic material is load-resistant at a temperature of at least 150°C and the fluid line (1) has a clearance between an inner diameter (9) of the expansion protector (8) and an outer diameter of the pipe (2), **characterized in that** that the expansion protector (8) has an inner diameter (9) which is at most 0.8 mm larger than the outer diameter of the pipe (2), wherein the expansion protector (8) has multiple sections which are distributed over the length of the pipe (2), wherein specific sections of the pipe (2) are formed without expansion protection.

2. Fluid line according to Claim 1, **characterized in that**, at a predetermined internal pressure which is smaller than a predetermined limit pressure, the pipe (2) bears radially at the inside against the expansion protector (8).

3. Fluid line according to Claim 1 or 2, **characterized in that** the expansion protector (8) has multiple supporting discs (10) which are directed substantially perpendicularly to the radially outer surface of the pipe (2).

4. Fluid line according to Claim 3, **characterized in that** the supporting discs (10) are connected to one another along the longitudinal extent of the pipe (2).

5. Fluid line according to Claim 3 or 4, **characterized in that**, in the longitudinal extent of the pipe (2), the supporting discs (10) have a spacing (11, 12) to one another that corresponds at most to the outer diameter of the pipe (2).

6. Fluid line according to one of Claims 1 to 5, **characterized in that**, on at least one end of the pipe (2), there is arranged a line connector (4) which has a connecting piece (5) which is plugged into the pipe (2), wherein the expansion protector (8) covers the connecting piece (5) at least over a part of its length.

7. Fluid line according to Claim 6, **characterized in that** the expansion protector (8) has a smooth end region (17) in the region of the connecting piece (5).

8. Fluid line according to Claim 6 or 7, **characterized in that** the expansion protector (8) is connected to a line connector (4).

## Revendications

1. Conduite pour fluide (1) comprenant un tube (2) constitué **d'une** matière plastique, le tube (2) étant entouré sur au moins une partie de sa longueur par une protection contre la dilatation (8), la matière plastique pouvant être soumise à une température d'au moins 150 °C et la conduite pour fluide (1) présentant un jeu entre un diamètre intérieur (9) de la protection contre la dilatation (8) et un diamètre extérieur du tube (2), **caractérisée en ce que** la protection contre la dilatation (8) présente un diamètre intérieur (9) qui est au maximum 0,8 mm plus grand que le diamètre extérieur du tube (2), la protection contre la dilatation (8) possédant plusieurs portions qui sont réparties sur la longueur du tube (2), certaines portions du tube (2) étant configurées sans protection contre la dilatation.

2. Conduite pour fluide selon la revendication 1, **caractérisée en ce que** le tube (2), en présence d'une pression interne prédéterminée qui est inférieure à une pression limite prédéterminée, repose radialement à l'intérieur contre la protection contre la dilatation (8).

3. Conduite pour fluide selon la revendication 1 ou 2, **caractérisée en ce que** la protection contre la dilatation (8) possède plusieurs disques de support (10) qui sont orientés sensiblement perpendiculairement à la surface radialement extérieure du tube (2).

4. Conduite pour fluide selon la revendication 3, **caractérisée en ce que** les disques de support (10) sont reliés entre eux le long de l'extension longitudinale du tube (2).

5. Conduite pour fluide selon la revendication 3 ou 4, **caractérisée en ce que** les disques de support (10) présentent entre eux, dans l'extension longitudinale du tube (2), un écart (11, 12) qui correspond au maximum au diamètre extérieur du tube (2).

6. Conduite pour fluide selon l'une des revendications 1 à 5, **caractérisée en ce qu'**à au moins une extrémité du tube (2) est disposé un connecteur de conduite (4), lequel possède un manchon de raccordement (5) qui est enfiché dans le tube (2), la protection contre la dilatation (8) recouvrant le manchon de raccordement (5) au moins sur une partie de sa longueur.

7. Conduite pour fluide selon la revendication 6, **caractérisée en ce que** la protection contre la dilatation (8) présente une zone d'extrémité lisse (17) dans la zone du manchon de raccordement (5).

8. Conduite pour fluide selon la revendication 6 ou 7, **caractérisée en ce que** la protection contre la dilatation (8) est reliée à un connecteur de conduite (4).
